# EUROPÄISCHE PATENTSCHRIFT

(11) **EP 1 809 503 B1**
(45) Veröffentlichungstag und Bekanntmachung des Hinweises auf die Patenterteilung: **25.08.2010**
(21) Anmeldenummer: 05804431.4
(22) Anmeldetag: 24.10.2005
(51) Int. Cl.: B60J 7/08, B60J 7/16

(54) **SCHIEBEDACHVORRICHTUNG FÜR KRAFTFAHRZEUGE**
SUNROOF DEVICE FOR MOTOR VEHICLES
SYSTEME DE TOIT COULISSANT POUR VEHICULES AUTOMOBILES

(30) Priorität: 22.10.2004 FR 0411250
(43) Veröffentlichungstag der Anmeldung: 25.07.2007
(73) Patentinhaber: Webasto AG, 82131 Stockdorf (DE)
(72) Erfinder: GODET, Thierry, F-79250 Nueil-les-Aubiers (FR)
(86) Internationale Anmeldenummer: PCT/DE2005/001907
(87) Internationale Veröffentlichungsnummer: WO 2006/042539

(56) Entgegenhaltungen:
- EP-A- 0 371 523
- FR-A- 2 695 596
- FR-A- 2 825 062
- US-A1- 2001 019 217
- US-A1- 2003 042 765

## Beschreibung

Die Erfindung betrifft eine Schiebedachvorrichtung, welche dazu bestimmt ist, eine im oberen Teil einer Karosserie eines Kraftfahrzeuges angebrachte Öffnung zu verschließen.

Die Erfindung findet eine besonders vorteilhafte, aber nicht ausschließliche Anwendung auf dem Gebiet von Nutzfahrzeugen.

Es sind Kraftfahrzeuge bekannt, deren hinterer Dachteil zu öffnen ist, und zwar über eine Schiebedachvorrichtung, die in den oberen Teil der Karosserie eingesetzt ist. Eine solche Schiebedachvorrichtung weist im Allgemeinen die Form einer Scheibe auf, die üblicherweise als Leiterklappe bezeichnet wird und die bezogen auf eine im oberen Teil der Karosserie des Kraftfahrzeuges angebrachte Öffnung in der verschiebebeweglich zwischen einer geschlossenen und einer geöffneten Stellung montiert ist. Das Ganze ist in der Weise angeordnet, dass die bewegliche Scheibe einerseits in der geschlossenen Stellung in der Lage ist, die Öffnung zu verschließen, und andererseits ist die genannte Scheibe in der geöffneten Stellung in der Lage, sich in einer Position zu erstrecken, die zumindest teilweise die genannte Öffnung freigibt.

Bei den nach dem Stand der Technik bekannten Schiebedachvorrichtungen sind diejenigen besonders zu erwähnen, bei denen die Bewegung der beweglichen Scheibe durch Motorkraft erfolgt.

Der Einsatz von Motoren ermöglicht sicherlich, Systeme mit relativ komplex zu führenden Bewegungen der Verschiebung der beweglichen Scheibe zu konzipieren, wobei in der Praxis diese Bewegungen fast immer komplex sind. In der Tat sind die Schiebedachvorrichtungen dieser Art im Allgemeinen in der Weise konzipiert, dass sich die bewegliche Scheibe zum einen in geschlossener Stellung in bündiger Weise positionieren kann und sich zum anderen in der geöffneten Stellung parallel über dem Dachhimmel erstrecken kann.

Diese Art von Schiebedachvorrichtungen weist jedoch den Nachteil auf, dass sie aufgrund der sehr großen strukturellen Komplexität, die durch den Motorantrieb der beweglichen Scheibe vorgegeben wird, extrem kostspielig ist. Eine solche Ausgestaltung erfordert in der Tat den Einbau von Motoren, von Antriebsmitteln, wie z.B. Seilen und sonstige Umlenkrollen, sowie von Führungsmitteln, wie z.B. Gleitschienen. Schlussendlich erweist sich eine Schiebedachvorrichtung mit motorgetriebener Scheibe als kostspielig und bietet eine Zuverlässigkeit, die sich als unzureichend erweisen kann, was ihren Einsatz beispielsweise bei Nutzfahrzeugen wenig zweckmäßig gestaltet.

Um dieser Schwierigkeit abzuhelfen, ist es natürlich möglich, in traditionellerer Weise eine Schiebedachvorrichtung mit rein manueller Bedienung einzusetzen. Insbesondere wird an ein System gedacht, das eine sich halb öffnende Scheibe aufweist, was heute die bei Nutzfahrzeugen am weitesten verbreitete Ausgestaltung darstellt.

Diese Art von Schiebedachvorrichtung ist jedoch auch nicht frei von Nachteilen, da die drehbare Montage der beweglichen Scheibe einen besonders großen Platzbedarf bei geöffneter Stellung auflöst. Diese Unannehmlichkeit ist im übrigen so ausgeprägt, dass das Ganze im Allgemeinen so konzipiert wird, dass die drehbare Scheibe ausgehängt werden kann. Konkret bedeutet dies jedoch, dass das Problem des Platzbedarfs lediglich verschoben wird, da es entsprechend erforderlich ist, das Ablegen des abnehmbaren Elementes zu gestalten.

Die FR 2 695 596 A1 offenbart eine Schiebedachvorrichtung für eine Kraftfahrzeugkarosserie, mit einer beweglichen Scheibe, die einer Öffnung in einer Wand der Fahrzeugkarosserie zugeordnet und um eine Achse drehbar ist. Die Drehachse ist zwischen zwei voneinander beabstandeten Positionen auf festen Halte- und Führungsmitteln translatorisch bewegbar montiert.

Entsprechend ist das durch den Gegenstand der vorliegenden Erfindung zu lösende technische Problem, eine Schiebedachvorrichtung vorzuschlagen, die dazu bestimmt ist, eine im oberen Teil einer Kraftfahrzeugkarosserie angebrachte Öffnung zu verschließen, wobei die genannte Schiebedachvorrichtung eine für die Verschiebung zwischen einer geschlossenen Stellung, in der die Scheibe geeignet ist, die Öffnung zu verschließen, und einer geöffneten Stellung, bei der die genannte Scheibe geeignet ist, sich zumindest teilweise von der genannten Öffnung beabstandet zu erstrecken, beweglich montierte Scheibe aufweist, wobei diese Schiebedachvorrichtung es ermöglichen würde, die Probleme nach dem Stand der Technik zu vermeiden und insbesondere in Bezug auf die praktische Nutzung und die Bequemlichkeit der Nutzung wesentliche Verbesserungen zu bringen und gleichzeitig besonders kostengünstig zu bleiben.

Die Lösung des gestellten technischen Problems besteht nach der vorliegenden Erfindung darin, dass die bewegliche Scheibe einerseits einen vorderen, relativ zu einer Achse, die ihrerseits in Querrichtung für die Verschiebung in einer im wesentlichen translationsartigen Bewegung drehbar bzw. schwenkbar montiert ist, drehbar montierten Teil und andererseits einen hinteren relativ zu einer Achse, die ihrerseits in Querrichtung relativ zu einer feststehenden Achse drehbar bzw. schwenkbar montiert ist, drehbar montierten Teil umfasst. Der vordere Teil der Scheibe ist mit mindestens einem Hebel angelenkt, der in einer Führungsschiene gleitet, die mit dem oberen Teil der Karosserie fest verbunden ist. Jeder Hebel weist mindestens einen vorderen Gleitschuh und mindestens einen hinteren Gleitschuh auf, die in der Lage sind, unabhängig voneinander auf der gleichen Führungsschiene zu gleiten.

Die so definierte Erfindung bietet den Vorteil, eine Kinematik anzubieten, die zum einen ausgezeichnet mit einer rein manuellen Funktionsweise kompatibel ist und gleichzeitig in der Lage ist, das Verschieben einer beweglichen Scheibe zwischen einer bündigen geschlossenen Stellung und einer geöffneten Stellung bei verringertem Platzbedarf sicherzustellen.

Im Vergleich zu den motorgetriebenen Systemen nach dem Stand der Technik gestaltet die strukturelle Einfachheit der Erfindung die Schiebedachvorrichtung leicht bedienbar und signifikant kostengünstiger. Sie bietet im übrigen eine beträchtliche Zuverlässigkeit im Rahmen einer Anwendung für Nutzfahrzeuge.

Die vorliegende Erfindung betrifft auch Merkmale, die sich im Laufe der folgenden Beschreibung ergeben und die isoliert bzw. in ihren sämtlichen möglichen technischen kombinationen zu betrachten sind.

Diese Beschreibung, die als nicht einschränkende Beispiel gegeben wird, ist dazu bestimmt, besser verständlich zu machen, woraus die Erfindung besteht und wie sie ausgeführt werden kann. Sie wird im übrigen unter Bezugnahme auf die beigefügten Zeichnungen gegeben, in denen
Fig. 1 eine perspektivische Ansicht des oberen Teils einer Karosserie eines Kraftfahrzeuges, das mit der Schiebedachvorrichtung nach der Erfindung ausgestattet ist, von hinten zeigt; die genannte Vorrichtung ist in geschlossener Stellung dargestellt;
Fig. 2 eine zur Fig. 1 analoge Ansicht ist, wobei jedoch die Schiebedachvorrichtung in der geöffneten Stellung befindlich ist und die hinteren Flügeltüren abgenommen sind;
Fig. 3 im Detail eine mechanische Verbindung zwischen dem vorderen Teil der beweglichen Scheibe und dem oberen Teil der Karosserie zeigt, wenn die sich die Schiebedachvorrichtung in der geschlossenen Stellung befindet;
Fig. 4 im Detail die mechanische Verbindung nach Fig. 3 zeigt, wenn sich die Schiebedachvorrichtung in geöffneter Stellung befindet;
Fig. 5 im Detail eine mechanische Verbindung zwischen dem hinteren Teil der beweglichen Scheibe mit dem oberen Teil der Karosserie zeigt, wenn sich die Schiebedachvorrichtung in geöffneter Stellung befindet;
Fig. 6 Verriegelungsmittel zeigt, die es ermöglichen, die bewegliche Scheibe zu blockieren, wenn sich die Schiebedachvorrichtung in der geöffneten Stellung befindet;
die Figuren 7 bis 10 insbesondere dazu bestimmt sind, die Kinematik der Schiebedachvorrichtung nach den Figuren 1 bis 6 zu erläutern;

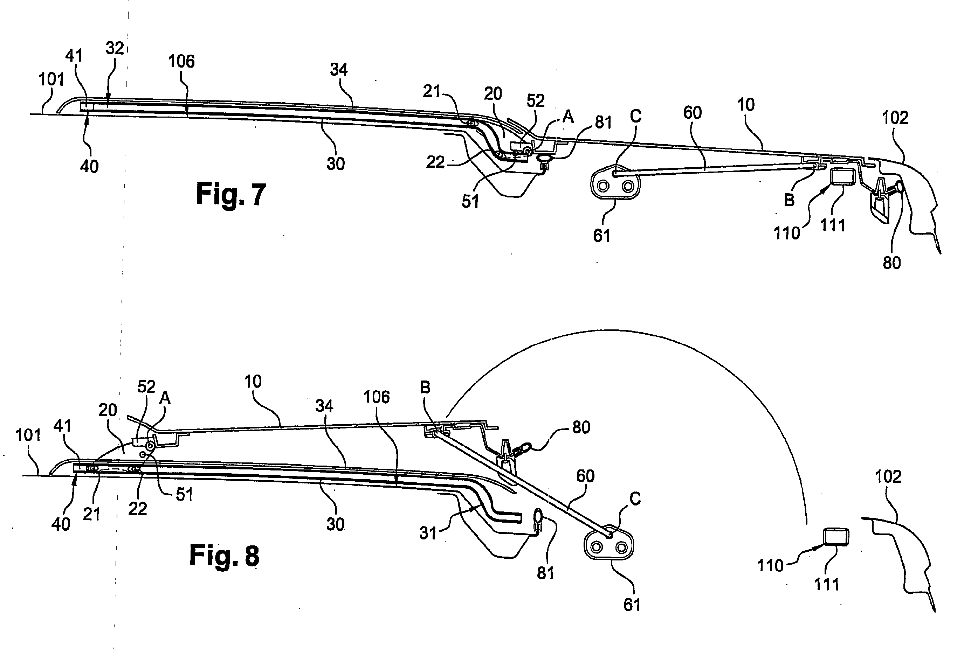

Fig. 7 eine Längsschnittansicht der Schiebedachvorrichtung in geschlossener Stellung ist, wobei der genannte Schnitt auf der Höhe einer der seitlichen Ränder der beweglichen Scheibe ausgeführt wurde;
Fig. 8 eine zur Fig. 7 ähnliche Ansicht zeigt, wobei sich jedoch die Schiebedachvorrichtung in der geöffneten Stellung befindet;

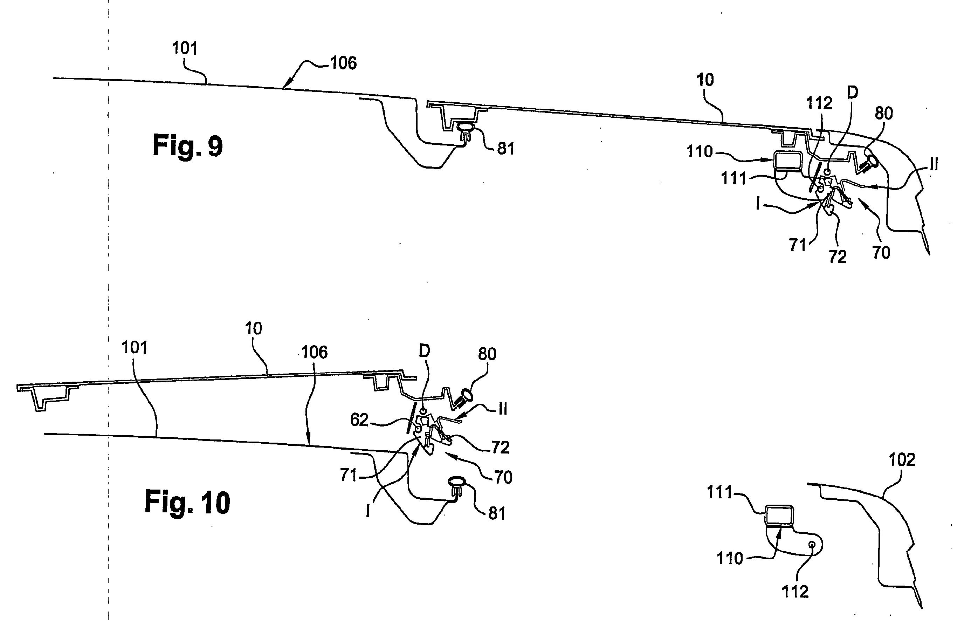

Fig. 9 eine Schnittansicht der Schiebedachvorrichtung in geschlossener Stellung ist;
Fig. 10 eine zur Fig. 8 ähnliche Ansicht darstellt, jedoch mit der Schiebedachvorrichtung in geöffneter Stellung;

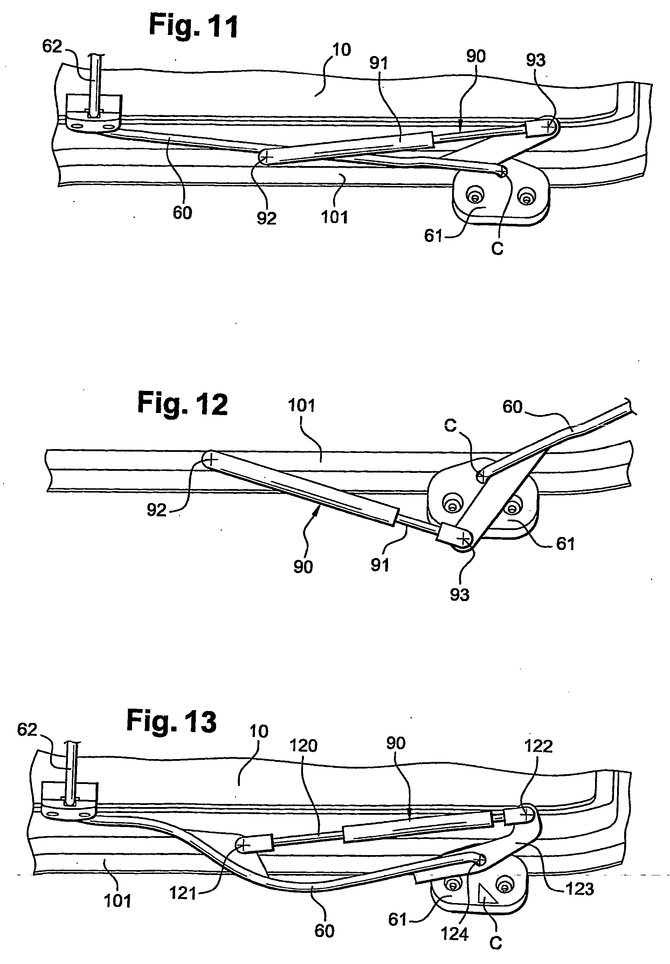

Fig. 11 Unterstützungsmittel 90 zeigt, die dazu bestimmt sind, den Einsatz der Schiebedachvorrichtung zu erleichtern und die einer ersten Ausgestaltung der Erfindung entsprechen, wobei die genannte Schiebedachvorrichtung in geschlossener Stellung dargestellt ist;
Fig. 12 eine zur Fig. 11 ähnliche Ansicht ist, wobei sich jedoch die Schiebedachvorrichtung in geöffneter Stellung befindet;
Fig. 13 Unterstützungsmittel 90 nach einer zweiten Ausgestaltung der Erfindung zeigt, wobei die Schiebedachvorrichtung in geschlossener Stellung dargestellt ist;

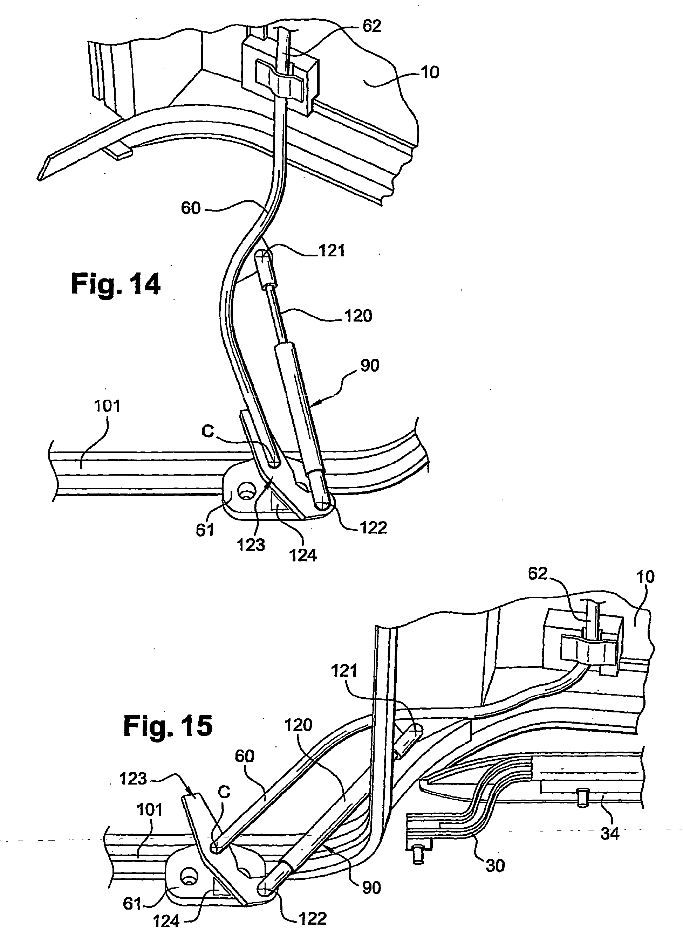

Fig. 14 eine zur Fig. 13 ähnliche Ansicht darstellt, wobei jedoch die Schiebedachvorrichtung im Laufe der Öffnung befindlich ist;
Fig. 15 eine zu den Figuren 13 und 14 ähnliche Ansicht darstellt, wobei sich jedoch die Schiebedachvorrichtung in geöffneter Stellung befindet.

Aus Gründen der Übersichtlichkeit werden gleiche Bauteile mit identischen Bezugszeichen bezeichnet. Desgleichen werden lediglich die für das Verständnis der Erfindung wesentlichen Elemente dargestellt, und dies ohne maßstabsgerecht zu sein und in schematischer Weise.

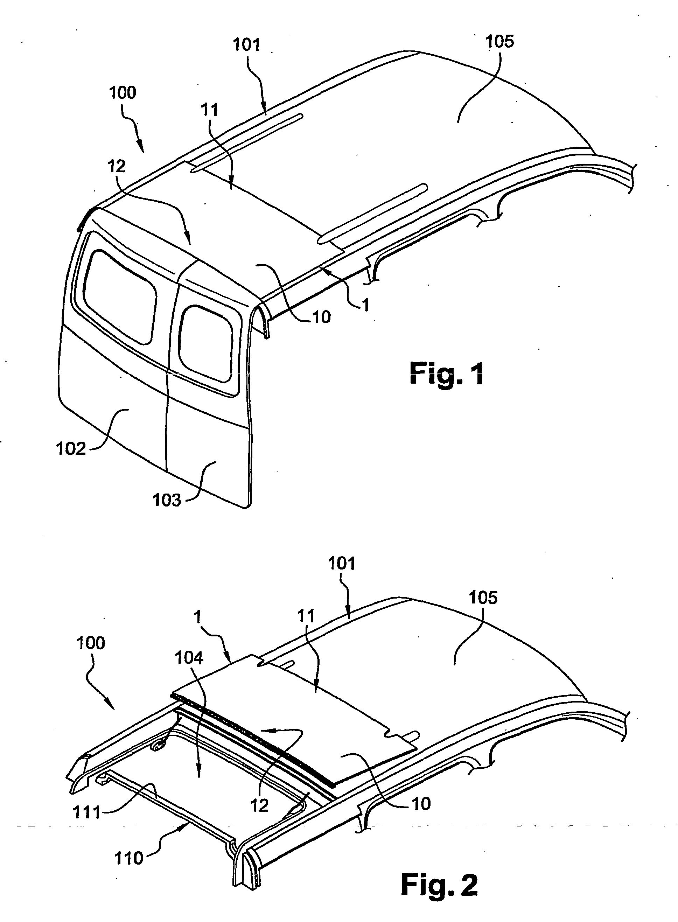

Fig. 1 zeigt ein Kraftfahrzeug 100, von dem wiederum ebenfalls aus Gründen der Übersichtlichkeit lediglich der obere Teil der Karosserie 101 und die beiden hinteren Flügeltüren 102, 103 dargestellt sind.

Wie insbesondere in Fig. 2 zu sehen ist, wurde im oberen Teil der Karosserie 101, hier im hinteren Teil der Dachhaut 105, eine Öffnung angebracht, um eine Schiebedachvorrichtung 1 nach der Erfindung aufzunehmen.

Die besagte Schiebedachvorrichtung 1 ist mit einer Scheibe 10 versehen, die für die Verschiebung zwischen einer geschlossenen Stellung (Fig. 1) und einer geöffneten Stellung (Fig. 2) beweglich montiert ist. Das Ganze ist in der Weise angeordnet, dass die bewegliche Scheibe 10 in der geschlossenen Stellung in der Lage ist, die Öffnung 104 zu verschließen und so, dass sich die genannte Scheibe 10 in der geöffneten Stellung von der genannten Öffnung 104 beabstandet erstreckt.

Entsprechend dem Gegenstand der vorliegenden Erfindung ist der vordere Teil 11 der beweglichen Scheibe 10 bezogen auf eine Achse A drehbar bzw. schwenkbar montiert, die ihrerseits in Querrichtung für die Verschiebung entsprechend einer im wesentlichen translationsartigen Bewegung beweglich montiert ist. Im übrigen ist der hintere Teil 12 der beweglichen Scheibe 10 seinerseits relativ zu einer Achse B drehbar bzw. schwenkbar montiert, die ihrerseits in Querrichtung in der Rotation relativ zu einer festen Achse C montiert ist.

Bei dieser besonderen Ausführungsform, die lediglich als Beispiel ausgewählt wurde, sind die Drehachse bzw. Schwenkachse A des vorderen Teils 11 der Scheibe 10 sowie die Drehachse bzw. Schwenkachse B des hinteren Teils 12 der genannten Scheibe 10 jeweils beide für die Verschiebung in im wesentlichen relativ zum oberen Teil der Karosserie 101 längs verlaufenden Richtungen beweglich montiert. Dies bedeutet mit anderen Worten, dass die Scheibe 10 hier vorzugsweise für die Verschiebung in Längsrichtung längs des hinteren Teils des Dachhimmels 105 beweglich montiert ist.

Nach einer derzeit bevorzugten Ausführungsform der Erfindung ist die Drehachse A des vorderen Teils 11 der Scheibe 10 für die Verschiebung entsprechend einer im wesentlichen zum oberen Teil der Karosserie 101 des Kraftfahrzeuges 100 parallelen Bewegung beweglich montiert.

In besonders vorteilhafter Weise ist das Ganze in der Weise ausgestaltet, dass die bewegliche Scheibe 10 in der geschlossenen Stellung bündig zu dem Teil des oberen Teils der Karosserie 101 angeordnet ist, welcher die Öffnung 104 begrenzt (Fig. 1). Diese Besonderheit ist nicht nur von einem rein ästhetischen Standpunkt aus interessant. Sie ermöglicht auch, Windgeräusche zu reduzieren.

Nach einem weiteren vorteilhaften Merkmal der Erfindung ist das Ganze in der Weise ausgestaltet, dass sich die bewegliche Scheibe 10 in geöffneter Stellung oberhalb und im wesentlichen parallel zum oberen Teil der Karosserie 101 (Fig. 2) erstreckt. Diese Besonderheit verleiht der Schiebedachvorrichtung 1 eine optimale Kompaktheit, wenn sich letztere in der geöffneten Stellung befindet. In der Tat sind die Scheibe 10 und die Dachhaut 105 dann direkt nebeneinander angeordnet und erstrecken sich im wesentlichen in der gleichen Richtung.

Bei dieser besonderen Ausgestaltung ist die bewegliche Scheibe 10 in der geöffneten Stellung im übrigen relativ zum oberen Teil der Karosserie 101 nach vorne geneigt (Fig. 8 und 10). Dieses Merkmal hat im wesentlichen zum Zweck, das manuelle Schließen der beweglichen Scheibe 10 ausgehend von der geöffneten Stellung zu erleichtern.

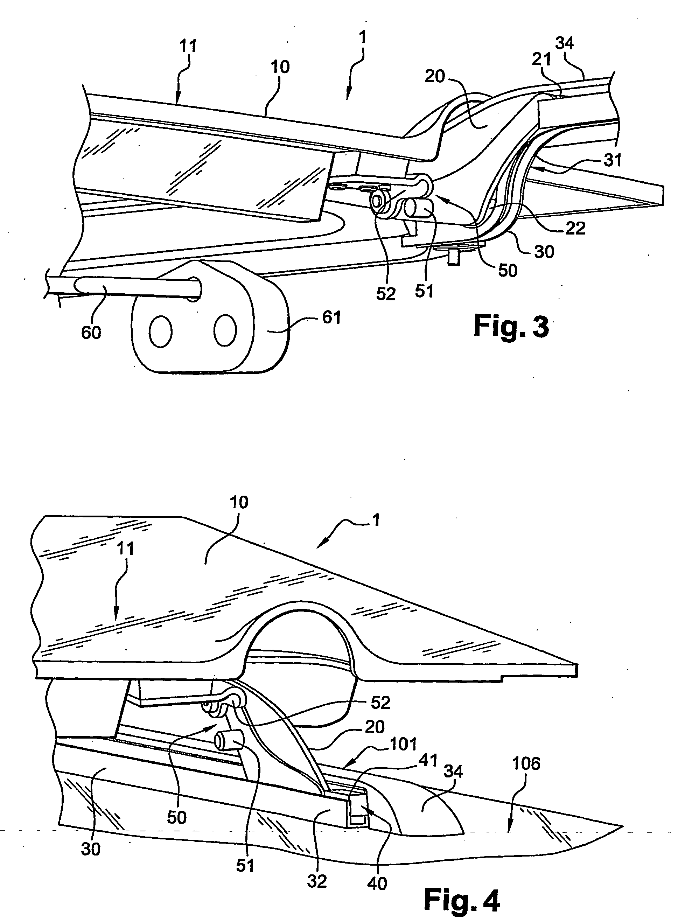

Nach einer insbesondere in den Figuren 3, 4, 7 und 8 zu sehenden Besonderheit der Erfindung ist der vordere Teil 11 der Scheibe 10 mit mindestens einem Hebel 20 angelenkt, der in der Lage ist, in einer Führungsschiene 30 zu gleiten, die mit dem oberen Teil der Karosserie 101 fest verbunden ist.

Bei diesem Ausführungsbeispiel wird die Beweglichkeit des vorderen Teils 11 der Scheibe 10 in der Tat durch zwei in Längsrichtung gleitende Hebel 20 sichergestellt, die im übrigen jeweils auf der Höhe der beiden seitlichen Ränder des genannten vorderen Teils 11 der Scheibe 10 relativ zur gleichen Achse A in Längsrichtung drehbar bzw. schwenkbar montiert sind.

In besonders vorteilhafter Weise ist jeder Hebel 20 in Längsrichtung, d.h. also entsprechend seiner Gleitrichtung, mit mindestens einem vorderen Gleitschuh 21 und mindestens einem hinteren Gleitschuh 22 versehen, die in der Lage sind, unabhängig voneinander auf der gleichen Führungsschiene 30 zu gleiten (Figuren 3, 7 und 8).

Die Tatsache, dass der Hebel 20 über zwei getrennte Gleitpunkte verfügt, verleiht ihm die Fähigkeit, in einer nicht geradlinigen Schiene 30 zu gleiten. Diese Eigenschaft erweist sich dann als wesentlich, wenn berücksichtigt wird, dass die Führung des vorderen Teils 11 der Scheibe 10 ausgehend von einer geschlossenen, relativ zur Dachhaut 105 bündigen Stellung bis zu einer offenen Stellung, die weit oberhalb der genannten Dachhaut 105 liegt, erforderlich ist.

Nach einem weiteren vorteilhaften Merkmal der Erfindung ist der vordere Teil 11 der Scheibe 10 an jedem Hebel 20 auf der Höhe eines Punktes angelenkt, der oberhalb des vorderen Gleitschuhs 21 und des hinteren Gleitschuhs 22 (Fig. 8) liegt. Diese Besonderheit hat zur Folge, eine Hebelwirkung zu schaffen, die geeignet ist, das Gleiten jedes Hebels 20 zu begünstigen, wenn die Scheibe 10 in Richtung auf die Öffnung und/oder die Schießung bewegt wird.

Vorzugsweise ist der vordere Teil 11 der Scheibe 10 an jedem Hebel 20 auf der Höhe eines Punktes angelenkt, der relativ zu jedem hinteren Gleitschuh 22 (Fig. 8) nach hinten positioniert ist.

Nach einer weiteren Besonderheit der Erfindung, die insbesondere in den Figuren 3, 5, 7 und 8 dargestellt wird, ist jede Führungsschiene 30 mit der Außenfläche 106 des oberen Teils der Karosserie 101 fest verbunden, weist jedoch in unmittelbarer Nähe der öffnung 104 einen geneigten Teil 31 auf, der sich unterhalb der genannten Außenfläche 106 erstreckt. Das Ganze ist im übrigen so ausgestaltet, dass in der geschlossenen Stellung (Fig. 7) der geneigte Teil 31 der Führungsschiene 30 in der Lage ist, den entsprechenden Hebel 20 mindestens teilweise in das Innere der Öffnung 104 kippen zu lassen, um die vordere Drehachse A der Scheibe 10 unterhalb des Teils der Karosserie 101 zu positionieren, der die Öffnung 104 abgrenzt, und den vorderen Teil 11 der genannten Scheibe 10 relativ zu dem genannten, die Öffnung 104 abgrenzenden Teil der Karosserie 101 in bündiger Weise zu positionieren.

In der Praxis kann jede Führungsschiene 30 beispielsweise aus Aluminium, Stahl, Spritzguss- oder extrudiertem Plastikmaterial ausgeführt sein. Sie kann im übrigen mit dem oberen Teil der Karosserie 101 durch Schrauben, Nieten, Kleben oder jede sonstige Befestigungstechnik verbunden sein.

Bei diesem Ausführungsbeispiel ist jede Führungsschiene 30 mit einer Abdeckung 34 verbunden, deren Funktion es ist, das Vorhandensein der genannten Führungsschiene 30 visuell zu kaschieren, wenn der obere Teil der Karosserie 101 von der Seite aus betrachtet wird, was die Ästhetik verbessern.

Nach einer weiteren Besonderheit der Erfindung ist die Schiebedachvorrichtung 1 mit ersten Anschlagmitteln 40 versehen, die in der Lage sind, die Bewegung der Scheibe 10 nach vorne zu blockieren, wenn letztere die geöffnete Stellung erreicht. Dieses Merkmal ermöglicht es, das Blockieren der Scheibe 10 in geöffneter Stellung dann zu garantieren, wenn diese in Richtung nach vorne beaufschlagt wird, insbesondere durch die Verriegelungsmittel 70, welche auf den hinteren Teil 12 der genannten Scheibe 10 einwirken.

In besonders vorteilhafter Weise umfassen die ersten Anschlagmittel 40 mindestens einen Prellbock 41, der in der Lage ist, das Gleiten eines Hebels 20 in seiner Führungsschiene 30 nach vorne zu blockieren, wenn die Scheibe 10 die geöffnete Stellung erreicht hat.

Wie in den Figuren 4, 7 und 8 zu sehen ist, sind bei dieser besonderen Ausführungsform zwei Prellböcke 41 jeweils an den vorderen Enden 32 der beiden Führungsschienen 30 fest verbunden. Zweck ist es, gemeinsam die Gleitbewegung in Längsrichtung der beiden Hebel 20, die den vorderen Teil 11 der beweglichen Scheibe 10 tragen, zu blockieren.

Nach einer weiteren Besonderheit der Erfindung ist die Schiebedachvorrichtung 1 mit zweiten Anschlagmitteln 50 versehen, welche in der Lage sind, das Drehen bzw. Verschwenken der Scheibe 10 relativ zur Achse A nach oben zu blockieren, wenn die genannte Scheibe 10 sich im wesentlichen in der geschlossenen Stellung (Fig. 11) befindet. Dieses Merkmal ermöglicht es gewissermaßen vorübergehend, die Hebel 20 mit der Scheibe 10 am Beginn der Öffnungsphase oder am Ende der Schließphase fest zu verbinden. Dies ermöglicht entsprechend das Passieren jedes Gleithebels 20 zwischen dem geneigten Teil 31 und dem lineareren Teil ihrer Führungsschiene 30, d.h. also demjenigen, der sich im oberen Teil der Karosserie 101 erstreckt.

In besonders vorteilhafter Weise verfügen die zweiten Anschlagmittel 50 über mindestens ein erstes, mit einem Hebel 20 fest verbundenes überstehendes Element 51 und mindestens ein zweites, mit der Scheibe 10 fest verbundenes überstehendes Element 52. Das Ganze ist in der Weise ausgestaltet, dass das erste überstehende Element 51 in der Lage ist, sich gegen ein zweites überstehendes Element 52 dann abzustützen, wenn sich die Scheibe 10 im wesentlichen in der geschlossenen Stellung befindet.

Wie insbesondere in den Figuren 3 und 4 zu sehen ist, ist jeder Hebel 20 hier mit einem ersten überstehenden Element 51 versehen, das die Form eines Stopfens hat, der sich in Querrichtung in Richtung auf sein Gegenstück erstreckt. Die Scheibe 10 ist ihrerseits mit zwei zweiten überstehenden Elementen 52 in Form von Fingern versehen, die sich längs nach vorne erstrecken.

Nach einer weiteren Besonderheit der Erfindung ist der hintere Teil 12 der Scheibe 10 am Ende mindestens eines Führungsarms 60 angelenkt, der in der Lage ist, um eine feste Achse C zu drehen bzw. zu schwenken, die direkt mit der Karosserie 101 in einer im wesentlichen zur hinteren Drehachse B der genannten Scheibe 10 senkrechten Ebene fest verbunden ist.

Bei diesem Ausführungsbeispiel wird die Beweglichkeit des hinteren Teils 12 der Scheibe 10 tatsächlich durch zwei Führungsarme 60 sichergestellt, die an ihren unteren Enden in Längsrichtung relativ zur Karosserie 101 um die feste Achse C drehbar bzw. schwenkbar montiert sind und an ihren oberen Enden in Längsrichtung auf der Höhe jeweils der beiden seitlichen Ränder des genannten hinteren Teils 12 der Scheibe 10 relativ zur gleichen Achse B drehbar bzw. schwenkbar montiert sind.

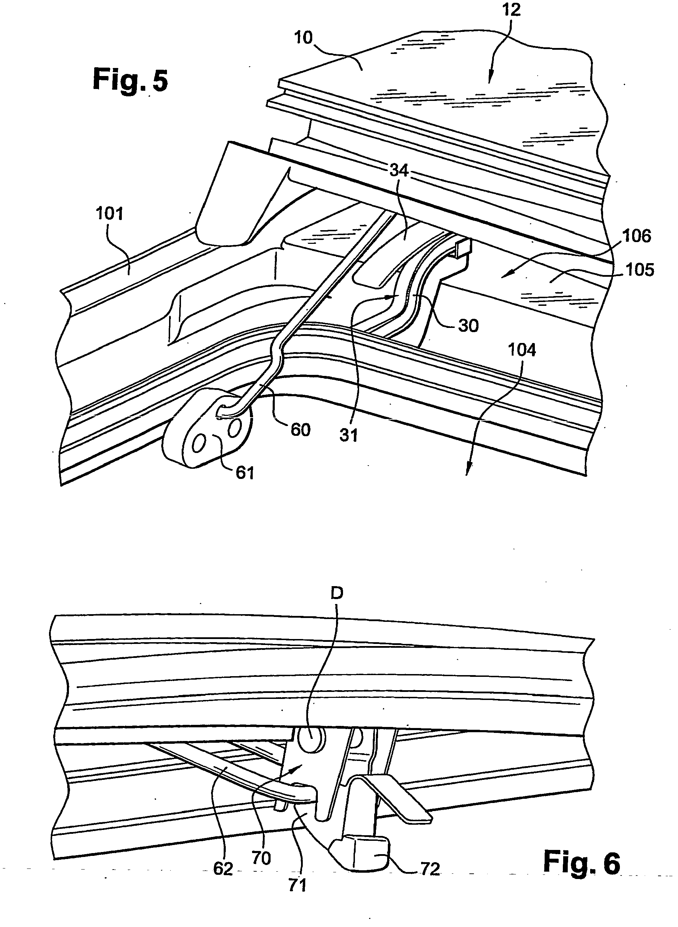

Wie in den Figuren 3 und 5 zu sehen ist, ist jeder Führungsarm 60 auf der Höhe der Karosserie 101 über ein Lager 61 drehbar montiert, das mit dem die Öffnung 104 begrenzenden Rand mittels zweier nicht dargestellter Befestigungsschrauben fest verbunden ist.

In besonders vorteilhafter Weise ist jeder Führungsarm 60 relativ zur Karosserie 101 an einem Punkt angelenkt, der sich unmittelbar an der Öffnung 104 befindet (Fig. 7 und 8).

Nach einem weiteren vorteilhaften Merkmal der Erfindung ist der hintere Teil 12 der Scheibe 10 am Ende zweier Führungsarme 60 angelenkt, die jeweils auf der Höhe der beiden seitlichen Ränder des genannten hinteren Teils 12 positioniert und im übrigen miteinander fest verbunden sind. Es versteht sich, dass die beiden Führungsarme 60 Teil ein und dasselbe Werkstück sein oder aber miteinander über mindestens ein Verbindungsstück fest verbunden werden können.

Nach einer weiteren, diesmal in den Figuren 6, 9 und 10 zu sehenden Besonderheit der Erfindung weist die Schiebedachvorrichtung 1 des weiteren Verriegelungsmittel 70 auf, die mit der Scheibe 10 fest verbunden und in der Lage sind, die Beweglichkeit der genannten Scheibe 10 sowohl in der geöffneten als auch in der geschlossenen Stellung zu blockieren.

In besonders vorteilhafter Weise sind die Verriegelungsmittel 70 in der geschlossenen Stellung in der Lage, sich in reversibler Weise in ein Strukturelement 110 des oberen Teils der Karosserie 101 (Fig. 9) einzuhaken. Bei diesem Ausführungsbeispiel besteht das Strukturelement 110 vorteilhafterweise aus einer abnehmbaren Stange 111, die in an sich bekannter Weise als oberer Verankerungspunkt für die hinteren Flügeltüren 102, 103 des Kraftfahrzeuges 100 dienen. Wie der Name dies besagt, weist die genannte Stange 111 die Fähigkeit auf, demontiert werden zu können, um den Laderaum des Fahrzeuges 100 dann vollkommen freizugeben, wenn die hinteren Türen 102, 103 ebenfalls abgenommen wurden.

Wie in Fig. 6 zu sehen ist, sind die Verriegelungsmittel 70 in geöffneter Stellung vorteilhafterweise in der Lage, sich reversibel in den Teil 62 einzuhaken, der die beiden Führungsarme 60 miteinander verbindet, wobei es klar ist, dass der hintere Teil 12 der Scheibe 10 hier am Ende der beiden fest miteinander verbundenen Führungsarme 60 angelenkt ist. Wie dies bereits vorstehend ausgeführt wurde, kann der Teil 62 durch den zentralen Teil ein und desselben Werkstücks gebildet werden, dessen beide Enden Führungsarme 60 bilden, oder durch ein Verbindungsstück, das die beiden unabhängigen Führungsarme 60 miteinander verbindet.

Bei diesem Ausführungsbeispiel bestehen die Verriegelungsmittel 70 in an sich bekannter Weise aus einem Verankerungshaken 71, der in Längsrichtung um eine Achse D drehbar montiert ist. Das Ganze ist in der Weise angeordnet, dass der Verankerungshaken 71 in der Lage ist, zwischen einer aktiven Stellung (Fig. 6, Position I der Figuren 9 und 10), bei der er geeignet ist, sich an einem Verankerungspunkt 62, 112 einzuhaken, und einer passiven Stellung (Position II der Figuren 9 und 10), bei der er sich beabstandet von jedem Verankerungspunkt 62, 112 erstreckt, verschoben zu werden. Ein aus Gründen der Übersichtlichkeit nicht dargestelltes elastisches Rückholmittel ist im übrigen vorgesehen, um den Verankerungshaken 71 in der aktiven Stellung mitzunehmen. Natürlich könnten die Verriegelungsmittel 70, die hier beispielhaft dargestellt wurden, durch jedes beliebige andere äquivalente reversible Einhaksystem ersetzt werden.

Nach einem weiteren vorteilhaften Merkmal der Erfindung sind die Verriegelungsmittel 70 mit einem Werkstück versehen, das einen Bediengriff 72 darstellt und es ermöglicht, die Scheibe 10 bei der Öffnung zu schieben und beim Schließen zu ziehen.

Nach einer weiteren Besonderheit der Erfindung kann die Schiebedachvorrichtung 1 des weiteren ein Luftleitelement aufweisen, das dann am oberen Teil der Karosserie oberhalb der Scheibe 10 positioniert wird, wenn letztere sich in der geöffneten Stellung befindet. Dieses Merkmal ist dazu bestimmt, Windgeräusche zu unterdrücken.

Bei dieser besonderen Ausführungsform, die lediglich als Beispiel gewählt wurde, wird die Schiebedachvorrichtung 1 im hinteren Teil einer Dachhaut 105 des Kraftfahrzeuges 100 eingesetzt. Es ist natürlich durchaus möglich, sie an jeder beliebigen anderen Stelle des oberen Teils der Karosserie 101, insbesondere vorne, zu integrieren. In genau diesem Fall wird die Schiebedachvorrichtung 1 einfach um 180° in der Weise gedreht, dass sie eine Art manuelles Schiebedach bildet.

Die Figuren 7 bis 10 ermöglichen es, die Kinematik der Schiebedachvorrichtung 1, wie vorstehend beschrieben, besser zu verstehen.

Wie in den Figuren 7 und 9 zu sehen ist, ist die Scheibe 10 in der geschlossenen Stellung relativ zur Außenfläche 106 des oberen Teils der Karosserie 101 bündig. Der Haken 71 der Verrieglungsmittel 70 erfasst einen Befestigungsfinger 112, welcher mit der abnehmbaren Stange 111 fest verbunden ist, so dass die Scheibe 10 vollständig blockiert wird.

Die Öffnungsphase beginnt also durch die Deaktivierung der Verriegelungsmittel 70, indem der Haken 71 von seiner aktiven Position I zu seiner passiven Position II gedreht bzw. verschwenkt wird. Wenn die Entriegelung stattgefunden hat, kann manuell eine Schubkraft auf den Bediengriff 72 nach oben und nach einer im wesentlichen längs verlaufenden Richtung ausgeübt werden, um die Beweglichkeit der Scheibe 10 zu bewirken.

Konkret beginnt der hintere Teil 12 der Scheibe 10, sich aufgrund des Ausrichtens durch Längsdrehen der Führungsarme 60 nach oben anzuheben. Fast gleichzeitig hebt sich auch der vordere Teil 11 der genannten Scheibe 10 relativ zum oberen Teil der Karosserie 101, und zwar deshalb, weil die Hebel 20 gleitend nach vorne in den geneigten Teilen 31 ihrer jeweiligen Führungsschienen 30 mitgenommen werden.

Letzterer Vorgang wird durch die zweiten Anschlagmittel 50 begünstigt, die in diesem Stadium der Bewegung vorteilhafterweise das Drehen der Scheibe 10 relativ zur Achse A nach oben blockieren. Entsprechend Fig. 7 ermöglicht die Auflage der verschiedenen überstehenden Elemente 51, 52 vorübergehend, jeden Hebel 20 fest mit der Scheibe 10 zu verbinden. Das Anheben des hinteren Teils 12 der Scheibe 10 hat also zur unmittelbaren Folge, die Hebel 20 aufzurichten. Da jedoch letztere gleitend in den Führungsschienen 30 mit geeignetem Profil montiert sind, wird dies in der Tat zur Wirkung haben, den Übergang jeder der Gleithebel 20 von den geneigten Teilen 31 ihrer Führungsschiene 30 zu dem Teil zu erleichtern, der sich oberhalb des oberen Teils der Karosserie 101 erstreckt.

Das Ausfahren der Scheibe 10 setzt sich also durch Kombination zweier Bewegungen des Verschiebens fort, d.h. also eine Translation in Längsrichtung für den vorderen Teil 11 und eine Rotation um eine Querachse hinsichtlich des hinteren Teils 12. Anzumerken ist, dass das Drehen der Scheibe 10 relativ zur Achse A dann ein Maximum durchläuft, wenn die Drehachse B des hinteren Teils 12 durch ihren maximalen Hub durchläuft, der sich relativ zur Achse C in der Vertikalen befindet.

Entsprechend den Figuren 8 und 10 wird die geöffnete Stellung dann erreicht, wenn die Hebel 20 mit den Prellböcken 41 in Kontakt treten, die an den vorderen Enden 32 der beiden Führungsschienen 30 fest miteinander verbunden sind. Die Scheibe 10 kann dann in dieser Position blockiert werden, indem erneut die Verriegelungsmittel 70 eingesetzt werden. Dafür wird der Haken 71 in den Teil 62 eingesetzt, der die beiden Führungsarme 60 miteinander verbindet.

Die Schließung der Scheibe 10 erfolgt logisch nach einer umgekehrten Kinematik.

Die Figuren 7 bis 10 zeigen ebenfalls das Vorhandensein von Dichtungen 80, 81, die die Aufgabe haben, die Dichtigkeit zwischen der Scheibe 10 und dem Teil der Karosserie 101 sicherzustellen, in dem die Öffnung 104 angebracht wurde.

Nach einer weiteren Besonderheit der Erfindung kann die Schiebedachvorrichtung 1 vorteilhafterweise Unterstützungsmittel 90 aufweisen, die in der Lage sind, das Gewicht der Scheibe 10 bei ihrem Transfer zwischen der geschlossenen Stellung und der geöffneten Stellung zu kompensieren.

Unter Transfer zwischen der geschlossenen Stellung und der geöffneten Stellung ist jede Bewegung der Scheibe 10 von der geschlossenen Stellung zu der geöffneten Stellung und/oder von der geöffneten Stellung zu der geschlossenen Stellung zu verstehen. Unabhängig davon ermöglicht dieses Merkmal eine erleichterte Beweglichkeit der Scheibe 10, insbesondere zu dem Zeitpunkt, zu dem der hintere Teil 12 der genannten Scheibe 10 bis zu seiner maximalen Höhe angehoben werden kann, und zwar durch Drehen in Längsrichtung der Führungsarme 60.

Entsprechend einer ersten in den Figuren 11 und 12 dargestellten Ausführungsform sind die Unterstützungsmittel 90 mindestens mit einem elastischen Rückholmittel 91 versehen, das in der Kompression aktiv ist und das seine Wirkung zwischen einem ersten Verankerungspunkt 92, der mit dem oberen Teil der Karosserie 101 fest verbunden ist, und einem zweiten Verankerungspunkt 93, der mit einem Führungsarm 60 fest verbunden ist, entfaltet. Das Ganze ist in der Weise ausgestaltet, dass der zweite Verankerungspunkt 93 gegenüber der hinteren Drehachse B der Scheibe 10 relativ zur Drehachse C des Führungsarms 60 positioniert ist.

Die Tatsache, das der zweite Verankerungspunkt 93 gegenüber der Achse B relativ zur Achse C liegt, bedeutet einfach, dass er im wesentlichen in einer diametral entgegengesetzten Weise zur Achse B relativ zur Achse C positioniert ist, ohne dass die ihn von der genannten Achse C trennende Distanz unbedingt gleich der Distanz ist, die die Achsen B und C trennt.

Diese Ausführungsform ermöglicht die Mitnahme der Scheibe 10 in Richtung auf die geöffnete Stellung am Beginn der Öffnungsphase, aber auch in Richtung auf die geschlossene Stellung am Beginn der Schließphase. Dies bedeutet umgekehrt, dass sie auch in der Lage ist, das Absinken der Scheibe 10 am Ende der Öffnungsphase sowie am Ende der Schließphase zu dämpfen. Dieses System ist in der Tat nur beidseitig einer Neutralposition aktiv, die dadurch gekennzeichnet ist, dass die beiden Verankerungspunkte 92, 93 des elastischen Rückholmittels 91 dann fluchtend mit der Drehachse C angeordnet sind.

Bei diesem besonderen Ausführungsbeispiel nach den Figuren 11 und 12 ist jeder Führungsarm 60 mit einem elastischen Rückholmittel 91 verbunden. Letzteres hat im übrigen in an sich bekannter Weise die Form einer in der Kompression aktiven Gasfeder.

Bei einer zweiten, diesmal in den Figuren 13 bis 15 dargestellten Ausführungsform sind die Unterstützungsmittel 90 mit mindestens einem elastischen Rückholmittel 120 versehen, das in der Kompression aktiv ist und das seine Wirkung zwischen einem ersten mit einem Führungsarm 60 fest verbundenen Verankerungspunkt 121 und einem zweiten mit einer drehbar bzw. schwenkbar um die Drehachse C des genannten Führungsarms 60 montierten Verbindungshebels 123 fest verbundenen Verankerungspunkt 122 ausübt. Unter dieser Voraussetzung ist der Verankerungspunkt 122 gegenüber der Achse B relativ zur Achse C angeordnet.

Das Ganze ist zunächst so ausgestaltet, dass der Verbindungshebel 123 in der Lage ist, im wesentlichen in der Verlängerung in Längsrichtung des Führungsarms 60 im Anschlag zu verbleiben, wenn die hintere Drehachse B der Scheibe 10 sich zwischen ihrer geschlossenen Stellung und der Vertikalen relativ zur Drehachse C befindet. Das Ganze ist im übrigen in der Weise ausgestaltet, dass der Verbindungshebel 123 auch in der Lage ist, durch Kontakt mit einem Anschlag 124 zusammenzuwirken, der fest mit dem oberen Teil der Karosserie 101 verbunden ist, wenn die Drehachse B sich zwischen der Vertikalen relativ zur Drehachse C und der geöffneten Stellung bewegt. Das Ganze ist außerdem in der Weise angeordnet, dass das Abstützen des Verbindungshebels 123 gegen den Anschlag 124 das Komprimieren des elastischen Rückholmittels 120 bewirkt.

Diese Ausführungsform ermöglicht es, die Scheibe 10 für die Verschiebung lediglich in Richtung auf die geöffnete Stellung mitzunehmen, und dies ausschließlich am Ende der Öffnungsphase. Die Kompensationsfunktion bleibt in der Tat während der gesamten Phase inaktiv, während der Verbindungshebel 123 im Anschlag gegen den Führungsarm 60 verbleibt.

Bei dem besonderen Ausführungsbeispiel nach den Figuren 13 bis 15 ist jeder Führungsarm 60 mit einem elastischen Rückholmittel 120 verbunden. Ebenso wie bei der ersten Ausführungsform weist das elastische Rückholmittel 120 in an sich bekannter Weise die Form einer in der Kompression aktiven Gasfeder auf.

Selbstverständlich betrifft die Erfindung allgemein jedes beliebige Kraftfahrzeug, das mindestens eine Schiebedachvorrichtung 1 wie oben beschrieben aufweist.

## Patentansprüche

1. Schiebedachvorrichtung (1), die dazu bestimmt ist, eine im oberen Teil einer Karosserie (101) eines Kraftfahrzeuges (100) angebrachte Öffnung (104) zu verschließen, wobei die Schiebedachvorrichtung (1) eine beweglich montierte Scheibe (10) aufweist für eine Verschiebung zwischen einer geschlossenen Stellung, in der die Scheibe (10) geeignet ist, die Öffnung (104) zu verschließen, und einer geöffneten Stellung, in der die Scheibe (10) geeignet ist, sich zumindest teilweise beabstandet von der Öffnung (104) zu erstrecken, wobei die bewegliche Scheibe (10) einerseits einen vorderen Teil (11) aufweist, der um eine Achse (A) drehbar montiert ist, die ihrerseits in Querrichtung entsprechend einer im wesentlichen translationsartigen Bewegung verschiebebeweglich montiert ist, und andererseits einen hinteren Teil (12), der um eine Achse (B) drehbar montiert, die ihrerseits in Querrichtung relativ zu einer festen Achse (C) drehbeweglich montiert ist,
wobei der vordere Teil (11) der Scheibe (10) mit mindestens einem Hebel (20) angelenkt ist, der in einer Führungsschiene (30) gleitet, die mit dem oberen Teil der Karosserie (101) fest verbunden ist,
**dadurch gekennzeichnet, dass** jeder Hebel (20) mindestens einen vorderen Gleitschuh (21) und mindestens einen hinteren Gleitschuh (22) aufweist, die in der Lage sind, unabhängig voneinander auf der gleichen Führungsschiene (30) zu gleiten.

2. Schiebedachvorrichtung (1) nach Anspruch 1, **dadurch gekennzeichnet, dass** die Drehachse (A) des vorderen Teils (11) der Scheibe (10) sowie die Drehachse (B) des hinteren Teils (12) der Scheibe (10) in im wesentlichen relativ zum oberen Teil der Karosserie (101) längs verlaufenden Richtungen verschiebebeweglich montiert sind.

3. Schiebedachvorrichtung (1) nach einem der Ansprüche 1 oder 2, **dadurch gekennzeichnet, dass** die Drehachse (A) des vorderen Teils (11) der Scheibe (10) für die Verschiebung entsprechend einer im wesentlichen zum oberen Teil der Karosserie (101) parallelen Bewegung beweglich montiert.

4. Schiebedachvorrichtung (1) nach einem der Ansprüche 1 bis 3, **dadurch gekennzeichnet, dass** die bewegliche Scheibe (10) in der geschlossenen Stellung bündig zu dem Teil des oberen Teils der Karosserie (101) angeordnet ist, welcher die Öffnung (104) begrenzt.

5. Schiebedachvorrichtung (1) nach einem der Ansprüche 1 bis 4, **dadurch gekennzeichnet, dass** sich die bewegliche Scheibe (10) in geöffneter Stellung oberhalb und im wesentlichen parallel zum oberen Teil der Karosserie (101) erstreckt.

6. Schiebedachvorrichtung (1) nach einem der. Ansprüche 1 bis 5, **dadurch gekennzeichnet, dass** die bewegliche Scheibe (10) in der geöffneten Stellung relativ zum oberen Teil der Karosserie (101) nach vorne geneigt ist.

7. Schiebedachvorrichtung (1) nach einem der Ansprüche 1 bis 6, **dadurch gekennzeichnet, dass** der vordere Teil (11) der Scheibe (10) an jedem Hebel (20) auf der Höhe eines Punktes angelenkt wird, der oberhalb des vorderen Gleitschuhs (21) und des hinteren Gleitschuhs (22) liegt.

8. Schiebedachvorrichtung (1) nach einem der Ansprüche 1 bis 7, **dadurch gekennzeichnet, dass** der vordere Teil (11) der Scheibe (10) an jedem Hebel (20) auf der Höhe eines Punktes angelenkt wird, der relativ zu jedem hinteren Gleitschuh (22) nach hinten gelegen ist.

9. Schiebedachvorrichtung (1) nach einem der Ansprüche 1 bis 8, **dadurch gekennzeichnet, dass** jede Führungsschiene (30) mit der Außenfläche (106) des oberen Teils der Karosserie (101) fest verbunden ist, und in unmittelbarer Nähe der Öffnung (104) einen geneigten Teil (31) aufweist, der sich unterhalb der genannten Außenfläche (106) erstreckt, und **dadurch**, dass der geneigte Teil (31) in der geschlossenen Stellung den entsprechenden Hebel (20) mindestens teilweise in das Innere der Öffnung (104) kippt, um die vordere Drehachse (A) der Scheibe (10) unterhalb des Teils der Karosserie (101) zu positionieren, der die Öffnung (104) begrenzt, und den vorderen Teil (11) der Scheibe (10) relativ zu dem die Öffnung (104) begrenzenden Teil der Karosserie (101) bündig positioniert.

10. Schiebedachvorrichtung (1) nach einem der Ansprüche 1 bis 9, **dadurch gekennzeichnet, dass** sie erste Anschlagmittel (40) aufweist, die die Bewegung der Scheibe (10) nach vorne blockieren, wenn letztere die geöffnete Stellung erreicht.

11. Schiebedachvorrichtung (1) nach Anspruch 10, **dadurch gekennzeichnet, dass** die ersten Anschlagmittel (40) mindestens einen Prellbock (41) umfassen, der das Gleiten eines Hebels (20) in seiner Führungsschiene (30) nach vorne blockiert, wenn die Scheibe (10) die geöffnete Stellung erreicht hat.

12. Schiebedachvorrichtung (1) nach einem der Anspräche 1 bis 11, **dadurch gekennzeichnet, dass** sie zweite Anschlagmittel 50 aufweist, welche das Drehen der Scheibe (10) relativ zur Achse (A) nach oben blockieren, wenn die genannte Scheibe (10) sich im wesentlichen in der geschlossenen Stellung befindet.

13. Schiebedachvorrichtung (1) nach Anspruch 12, **dadurch gekennzeichnet, dass** die zweiten Anschlagmittel (50) mindestens ein erstes, mit einem Hebel (20) fest verbundenes überstehendes Element (51) und mindestens ein zweites, mit der Scheibe (10) fest verbundenes überstehendes Element (52) aufweisen, wobei sich jedes erste überstehende Element (51) gegen ein zweites überstehendes Element (52) dann abstützt, wenn sich die Scheibe (10) im wesentlichen in der geschlossenen Stellung befindet.

14. Schiebedachvorrichtung (1) nach einem der Ansprüche 1 bis 13, **dadurch gekennzeichnet, dass** der hintere Teil (12) der Scheibe (10) am Ende mindestens eines Führungsarms (60) angelenkt ist, der um eine feste Achse (C) dreht, die direkt mit der Karosserie (101) in einer im wesentlichen zur hinteren Drehachse (B) der Scheibe (10) senkrechten Ebene fest verbunden ist.

15. Schiebedachvorrichtung (1) nach Anspruch 14, **dadurch gekennzeichnet, dass** jeder Führungsarm (60) relativ zur Karosserie (101) an einem Punkt angelenkt ist, der sich unmittelbar an der Öffnung (104) befindet.

16. Schiebedachvorrichtung (1) nach einem der Ansprüche 14 oder 15, **dadurch gekennzeichnet, dass** der hintere Teil (12) der Scheibe (10) am Ende zweier Führungsarme (60) angelenkt ist, die jeweils auf der Höhe der beiden seitlichen Ränder des hinteren Teils (12) positioniert und miteinander fest verbunden sind.

17. Schiebedachvorrichtung (1) nach einem der Ansprüche 1 bis 16, **dadurch gekennzeichnet, dass** sie Verriegelungsmittel (70) auf weist, die mit der Scheibe (10) fest verbunden sind und die Beweglichkeit der Scheibe (10) sowohl in der geöffneten als auch in der geschlossenen Stellung blockieren.

18. Schiebedachvorrichtung (1) nach 17, **dadurch gekennzeichnet, dass** sich die Verriegelungsmittel (70) in der geschlossenen Stellung reversibel in ein Strukturelement (110) des oberen Teils der Karosserie (101) einhaken.

19. Schiebedachvorrichtung (1) nach einem der Ansprüche 17 oder 18, **dadurch gekennzeichnet, dass** der hintere Teil (12) der Scheibe (10) am Ende der beiden fest miteinander verbundenen Führungsarme (60) angelenkt ist, und **dadurch**, dass sich die Verriegelungsmittel (70) reversibel in den zwischen den genannten Führungsarmen (60) verbindenden Teil (62) einhaken.

20. Schiebedachvorrichtung (1) nach einem der Ansprüche 17 bis 19, **dadurch gekennzeichnet, dass** die Verriegelungsmittel (70) einen Bediengriff (72) aufweisen, der es ermöglicht, die Scheibe (10) bei der Öffnung zu schieben und beim Schließen zu ziehen.

21. Schiebedachvorrichtung (1) nach einem der Ansprüche 1 bis 20, **dadurch gekennzeichnet, dass** sie ein Luftleitelement aufweist, das relativ zum oberen Teil der Karosserie (101) oberhalb der Scheibe (10) positioniert wird, wenn letztere sich in der geöffneten Stellung befindet.

22. Schiebedachvorrichtung (1) nach einem der Ansprüche 1 bis 21, **dadurch gekennzeichnet, dass** sie des weiteren Unterstützungsmittel (90) aufweist, die das Gewicht der Scheibe' (10) bei ihrem Transfer zwischen der geschlossenen Stellung und der geöffneten Stellung kompensieren.

23. Schiebedachvorrichtung (1) nach 22, **dadurch gekennzeichnet, dass** die Unterstützungsmittel (90) mindestens ein elastisches Rückholmittel (91), das in der Kompression aktiv ist und das seine Wirkung zwischen einem ersten Verankerungspunkt (92), der mit dem oberen Teil der Karosserie (101) fest verbunden ist, und einem zweiten verankerungspuniet 93 auf weisen, der mit einem Führungsarm (60) fest verbunden ist, entfaltet, wobei der zweite Verankerungspunkt (93) gegenüber der hinteren Drehachse (B) der Scheibe (10) relativ zur Drehachse (C) des Führungsarms (60) positioniert ist.

24. Schiebedachvorrichtung (1) nach 23, **dadurch gekennzeichnet, dass** die Unterstützungsmittel (90) mit mindestens einem elastischen Rückholmittel (120) versehen sind, das in der Kompression aktiv ist und das seine Wirkung zwischen einem ersten mit einem Führungsarm (60) fest verbundenen Verankerungspunkt (121) und einem zweiten mit einer drehbar um die drehachse (C) des Führungsarms (60) montierten Verbindungshebel (123) fest verbundenen Verankerungspunkt (122) ausübt, wobei der Verankerungspunkt (122) gegenüber der Achse (B) relativ zur Achse (C) positioniert ist, wobei der Verbindungshebel (123) in der Lage ist, einerseits im wesentlichen in der Verlängerung in Längsrichtung des Führungsarms (60) im Anschlag zu verbleiben, wenn die hintere Drehachse (B) der Scheibe (10) sich zwischen ihrer geschlossenen Stellung und der Vertikalen relativ zur Drehachse (C) befindet und anderseits durch Kontakt mit einem Anschlag (124) zusammenzuwirken, der fest mit dem oberen Teil der Karosserie (101) verbunden ist, wenn die Drehachse (B) sich zwischen der Vertikalen relativ zur Drehachse (C) und der geöffneten Stellung bewegt, wobei das Abstützen des Verbindungshebels (123) gegen den Anschlag (124) das Komprimieren des elastischen Rückholmittels (120) bewirkt.

25. Schiebedachvorrichtung (1) nach einem der Ansprüche 1 bis 24, **dadurch gekennzeichnet, dass** sie dazu bestimmt ist, in den hinteren Teil einer Dachhaut (105) eines Kraftfahrzeuges (100) eingesetzt zu werden.

26. Kraftfahrzeug (100), **dadurch gekennzeichnet, dass** es mindestens eine Schiebedachvorrichtung (1) nach einem der vorstehenden Patentansprüche aufweist.

## Claims

1. Sunroof device (1) which is intended for closing an opening (104) provided in the upper part of a body (101) of a motor vehicle (100), wherein the sunroof device (1) has a movably mounted pane (10) for displacement between a closed position, in which the pane (10) is capable of closing the opening (104), and an open position, in which the pane (10) is capable of extending at least partially at a distance from the opening (104), wherein the movable pane (10) firstly has a front part (11) which is mounted rotatably about an axis (A) which, for its part, is mounted displaceably in the transverse direction corresponding to a substantially translation-like movement, and secondly has a rear part (12) which is mounted rotatably about an axis (B) which, for its part, is mounted rotatably in the transverse direction relative to a fixed axis (C), wherein the front part (11) of the pane (10) is coupled to at least one lever (20) which slides in a guide rail (30) which is connected fixedly to the upper part of the body (101), **characterized in that** each lever (20) has at least one front sliding block (21) and at least one rear sliding block (22) which are capable of sliding on the same guide rail (30) independently of each other.

2. Sunroof device (1) according to Claim 1, **characterized in that** the axis of rotation (A) of the front part (11) of the pane (10) and the axis of rotation (B) of the rear part (12) of the pane (10) are mounted displaceably in directions substantially running longitudinally relative to the upper part of the body (101).

3. Sunroof device (1) according to either of Claims 1 and 2, **characterized in that** the axis of rotation (A) of the front part (11) of the pane (10) is mounted movably for displacement corresponding to a movement substantially parallel to the upper part of the body (101).

4. Sunroof device (1) according to one of Claims 1 to 3, **characterized in that**, in the closed position, the movable pane (10) is arranged flush with that part of the upper part of the body (101) which bounds the opening (104).

5. Sunroof device (1) according to one of Claims 1 to 4, **characterized in that**, in the open position, the movable pane (10) extends above and substantially parallel to the upper part of the body (101).

6. Sunroof device (1) according to one of Claims 1 to 5, **characterized in that**, in the open position, the movable pane (10) is inclined forwards relative to the upper part of the body (101).

7. Sunroof device (1) according to one of Claims 1 to 6, **characterized in that** the front part (11) of the pane (10) is coupled to each lever (20) at the height of a point which is located above the front sliding block (21) and the rear sliding block (22).

8. Sunroof device (1) according to one of Claims 1 to 7, **characterized in that** the front part (11) of the pane (10) is coupled to each lever (20) at the height of a point which is positioned to the rear relative to each rear sliding block (22).

9. Sunroof device (1) according to one of Claims 1 to 8, **characterized in that** each guide rail (30) is fixedly connected to the outer surface (106) of the upper part of the body (101) and in the direct vicinity of the opening (104) has an inclined part (31) which extends under the outer surface (106) referred to, and **in that**, in the closed position, the inclined part (31) tilts the corresponding lever (20) at least partially into the interior of the opening (104) in order to position the front axis of rotation (A) of the pane (10) below that part of the body (101) which bounds the opening (104) and positions the front part (11) of the pane (10) flush relative to that part of the body (101) which bounds the opening (104).

10. Sunroof device (1) according to one of Claims 1 to 9, **characterized in that** it has first stop means (40) which block the movement of the pane (10) forwards when the pane reaches the open position.

11. Sunroof device (1) according to Claim 10, **characterized in that** the first stop means (40) comprise at least one buffer (41) which blocks the sliding of a lever (20) forwards in the guide rail (30) thereof when the pane (10) has reached the open position.

12. Sunroof device (1) according to one of Claims 1 to 11, **characterized in that** it has second stop means 50 which block the rotation of the pane (10) upwards relative to the axis (A) when the pane (10) referred to is substantially in the closed position.

13. Sunroof device (1) according to Claim 12, **characterized in that** the second stop means (50) have at least one first protruding element (51) connected fixedly to a lever (20) and at least one second protruding element (52) connected fixedly to the pane (10), each first protruding element (51) being supported against a second protruding element (52) when the pane (10) is substantially in the closed position.

14. Sunroof device (1) according to one of Claims 1 to 13, **characterized in that** the rear part (12) of the pane (10) is coupled to the end of at least one guide arm (60) which rotates about a fixed axis (C) which is connected fixedly directly to the body (101) in a plane substantially perpendicular to the rear axis of rotation (B) of the pane (10).

15. Sunroof device (1) according to Claim 14, **characterized in that** each guide arm (60) is coupled relative to the body (101) at a point located directly at the opening (104).

16. Sunroof device (1) according to either of Claims 14 and 15, **characterized in that** the rear part (12) of the pane (10) is coupled to the end of two guide arms (60) which are each positioned at the height of the two lateral edges of the rear part (12) and are connected fixedly to each other.

17. Sunroof device (1) according to one of Claims 1 to 16, **characterized in that** it has locking means (70) which are connected fixedly to the pane (10) and block the movability of the pane (10) both in the open and in the closed position.

18. Sunroof device (1) according to Claim 17, **characterized in that**, in the closed position, the locking means (70) hook reversibly into a structure element (110) of the upper part of the body (101).

19. Sunroof device (1) according to either of Claims 17 and 18, **characterized in that** the rear part (12) of the pane (10) is coupled to the end of the two guide arms (60) connected fixedly to each other, and **in that** the locking means (70) hook reversibly into the connecting part (62) between the guide arms (60) referred to.

20. Sunroof device (1) according to one of Claims 17 to 19, **characterized in that** the locking means (70) have an operating handle (72) which makes it possible to push the pane (10) during opening and to pull said pane during closing.

21. Sunroof device (1) according to one of Claims 1 to 20, **characterized in that** it has an air-guiding element which is positioned above the pane (10) relative to the upper part of the body (101) when said pane is in the open position.

22. Sunroof device (1) according to one of Claims 1 to 21, **characterized in that** it furthermore has supporting means (90) which compensate for the weight of the pane (10) during the transfer thereof between the closed position and the open position.

23. Sunroof device (1) according to Claim 22, **characterized in that** the supporting means (90) have at least one elastic return means (91) which is active in compression and deploys its effect between a first anchoring point (92) connected fixedly to the upper part of the body (101) and a second anchoring point (93) connected fixedly to a guide arm (60), the second anchoring point (93) being positioned with respect to the rear axis of rotation (B) of the pane (10) relative to the axis of rotation (C) of the guide arm (60).

24. Sunroof device (1) according to Claim 23, **characterized in that** the supporting means (90) are provided with at least one elastic return means (120) which is active in compression and exerts its effect between a first anchoring point (121) connected fixedly to a guide arm (60) and a second anchoring point (122) connected fixedly to a connecting lever (123) which is mounted rotatably about the axis of rotation (C) of the guide arm (60), the anchoring point (122) being positioned with respect to the axis (B) relative to the axis (C), the connecting lever (123) being capable firstly of remaining stopped substantially in extension in the longitudinal direction of the guide arm (60) when the rear axis of rotation (B) of the pane (10) is located between the closed position of said pane and the vertical relative to the axis of rotation (C), and secondly of interacting by means of contact with a stop (124) which is connected fixedly to the upper part of the body (101) when the axis of rotation (B) moves between the vertical relative to the axis of rotation (C) and the open position, the supporting of the connecting lever (123) against the stop (124) causing the elastic return means (120) to be compressed.

25. Sunroof device (1) according to one of Claims 1 to 24, **characterized in that** it is determined to be used in the rear part of a roof skin (105) of a motor vehicle (100).

26. Motor vehicle (100), **characterized in that** it has at least one sunroof device (1) according to one of the preceding patent claims.

## Revendications

1. Système de toit coulissant (1) conçu pour fermer une ouverture (104) réalisée dans la partie supérieure d'une carrosserie (101) d'un véhicule automobile (100), le système de toit coulissant (1) comportant une vitre (10) montée de façon mobile pour être coulissée entre une position fermée dans laquelle la vitre (10) est adaptée pour fermer l'ouverture (104) et une position ouverte dans laquelle la vitre (10) est adaptée pour s'écarter au moins en partie de l'ouverture (104), la vitre (10) mobile comportant d'une part une partie avant (11) montée de façon pivotante autour d'un axe (A) monté pour sa part de façon mobile en coulissement dans la direction transversale en fonction d'un mouvement de type translatoire et d'autre part une partie arrière (12) montée de façon pivotante autour d'un axe (B) monté pour sa part de façon mobile en rotation dans la direction transversale par rapport à un axe fixe (C), la partie avant (11) de la vitre (10) étant articulée à au moins un levier (20) coulissant dans un rail de guidage (30) relié fixement à la partie supérieure de la carrosserie (101), **caractérisé en ce que** chaque levier (20) comporte au moins un patin de glissement (21) avant et au moins un patin de glissement (22) arrière pouvant glisser indépendamment l'un de l'autre sur le même rail de guidage (30).

2. Système de toit coulissant (1) selon la revendication 1, **caractérisé en ce que** l'axe de rotation (A) de la partie avant (11) de la vitre (10) ainsi que l'axe de rotation (B) de la partie arrière (12) de la vitre (10) sont montés de façon mobile par coulissement dans des directions s'étendant pour l'essentiel dans le sens de la longueur par rapport à la partie supérieure de la carrosserie (101).

3. Système de toit coulissant (1) selon l'une quelconque des revendications 1 ou 2, **caractérisé en ce que** l'axe de rotation (A) de la partie avant (11) de la vitre (10) est monté de façon mobile pour le coulissement en fonction d'un mouvement pour l'essentiel parallèle par rapport à une partie supérieure de la carrosserie (101).

4. Système de toit coulissant (1) selon l'une quelconque des revendications 1 à 3, **caractérisé en ce que** la vitre (10) mobile est disposée, en position fermée, en affleurement par rapport à la partie de la partie supérieure de la carrosserie (101) limitant l'ouverture (104).

5. Système de toit coulissant (1) selon l'une quelconque des revendications 1 à 4, **caractérisé en ce que** la vitre (10) mobile s'étend, en position ouverte, au-dessus et pour l'essentiel parallèlement à la partie supérieure de la carrosserie (101).

6. Système de toit coulissant (1) selon l'une quelconque des revendications 1 à 5, **caractérisé en ce qu'**en position ouverte, la vitre (10) mobile est inclinée vers l'avant par rapport à la partie supérieure de la carrosserie (101).

7. Système de toit coulissant (1) selon l'une quelconque des revendications 1 à 6, **caractérisé en ce que** la partie avant (11) de la vitre (10) est articulée au niveau de chaque levier (20) à hauteur d'un point reposant au-dessus du patin de glissement (21) avant et du patin de glissement (22) arrière.

8. Système de toit coulissant (1) selon l'une quelconque des revendications 1 à 7, **caractérisé en ce que** la partie avant (11) de la vitre (10) est articulée au niveau de chaque levier (20) à hauteur d'un point disposé vers l'arrière par rapport à chaque patin de glissement (22) arrière.

9. Système de toit coulissant (1) selon l'une quelconque des revendications 1 à 8, **caractérisé en ce que** chaque rail de guidage (30) est relié fixement à la surface extérieure (106) de la partie supérieure de la carrosserie (101) et comporte à proximité immédiate de l'ouverture (104) une partie inclinée (31) s'étendant en dessous de ladite surface extérieure (106) et que dans la position fermée, la partie inclinée (31) bascule le levier (20) correspondant au moins en partie à l'intérieur de l'ouverture (104), pour positionner l'axe de rotation avant (A) de la vitre (10) en dessous de la partie de la carrosserie (101) délimitant l'ouverture (104) et positionne en affleurement la partie avant (11) de la vitre (10) par rapport à la partie de la carrosserie (101) délimitant l'ouverture (104).

10. Système de toit coulissant (1) selon l'une quelconque des revendications 1 à 9, **caractérisé en ce qu'**il comporte des premiers moyens de butée (40) bloquant le mouvement de la vitre (10) vers l'avant lorsque cette dernière atteint la position ouverte.

11. Système de toit coulissant (1) selon la revendication 10, **caractérisé en ce que** les premiers moyens de butée (40) comprennent au moins un butoir (41) bloquant le coulissement vers l'avant d'un levier (20) dans son rail de guidage (30) lorsque la vitre (10) a atteint la position ouverte.

12. Système de toit coulissant (1) selon l'une quelconque des revendications 1 à 11, **caractérisé en ce qu'**il comporte des deuxièmes moyens de butée (50) bloquant le pivotement de la vitre (10) vers le haut par rapport à l'axe (A) lorsque ladite vitre (10) se trouve pour l'essentiel dans la position fermée.

13. Système de toit coulissant (1) selon la revendication 12, **caractérisé en ce que** les deuxièmes moyens de butée (50) comportent au moins un premier élément (51) saillant relié fixement à un levier (20) et au moins un deuxième élément (52) saillant relié fixement à la vitre (10), chaque premier élément (51) saillant s'appuyant alors contre un deuxième élément (52) saillant lorsque la vitre (10) se trouve pour l'essentiel en position fermée.

14. Système de toit coulissant (1) selon l'une quelconque des revendications 1 à 13, **caractérisé en ce que** la partie arrière (12) de la vitre (10) est articulée au niveau d'une extrémité au moins d'un bras de guidage (60) tournant autour d'un axe fixe (C) directement relié fixement à la carrosserie (101) dans un plan pour l'essentiel perpendiculaire à l'axe de rotation arrière (B) de la vitre (10).

15. Système de toit coulissant (1) selon la revendication 14, **caractérisé en ce que** chaque bras de guidage (60) est articulé en un point se trouvant directement au niveau de l'ouverture (104) par rapport à la carrosserie (101).

16. Système de toit coulissant (1) selon l'une quelconque des revendications 14 ou 15, **caractérisé en ce que** la partie arrière (12) de la vitre (10) est articulée au niveau de l'extrémité des deux bras de guidage (60) positionnés respectivement à hauteur des deux bords latéraux de la partie arrière (12) et reliés fixement entre eux.

17. Système de toit coulissant (1) selon l'une quelconque des revendications 1 à 16, **caractérisé en ce qu'**il comporte des moyens de verrouillage (70) reliés fixement à la vitre (10) et bloquant le mouvement de la vitre (10) tant dans la position ouverte que dans la position fermée.

18. Système de toit coulissant (1) selon la revendication 17, **caractérisé en ce que** les moyens de verrouillage (70) s'accrochent dans la position fermée de façon réversible dans un élément structurel (110) de la partie supérieure de la carrosserie (101).

19. Système de toit coulissant (1) selon l'une quelconque des revendications 17 ou 18, **caractérisé en ce que** la partie arrière (12) de la vitre (10) est articulée au niveau de l'extrémité des deux bras de guidage (60) reliés fixement entre eux et que les moyens de verrouillage (70) s'accrochent de façon réversible dans la partie (62) reliant lesdits bras de guidage (60).

20. Système de toit coulissant (1) selon l'une quelconque des revendications 17 à 19, **caractérisé en ce que** les moyens de verrouillage (70) comportent une poignée d'utilisation (72) qui permet de pousser la vitre (10) lors de son ouverture et de la tirer lors de sa fermeture.

21. Système de toit coulissant (1) selon l'une quelconque des revendications 1 à 20, **caractérisé en ce qu'**il comporte un élément de conduite d'air positionné au-dessus de la vitre (10) par rapport à la partie supérieure de la carrosserie (101), lorsque cette première se trouve en position ouverte.

22. Système de toit coulissant (1) selon l'une quelconque des revendications 1 à 21, **caractérisé en ce qu'**il comporte en outre des moyens de soutien (90) compensant le poids de la vitre (10) lors de son transfert entre la position fermée et la position ouverte.

23. Système de toit coulissant (1) selon la revendication 22, **caractérisé en ce que** les moyens de soutien (90) comportent au moins un moyen de rappel (91) élastique actif en compression et développant son effet entre un premier point d'ancrage (92) relié fixement à la partie supérieure de la carrosserie (101) et un deuxième point d'ancrage (93) relié fixement à un bras de guidage (60), le deuxième point d'ancrage (93) étant positionné à l'opposée de l'axe de rotation arrière (B) de la vitre (10) par rapport à l'axe de rotation (C) du bras de guidage (60).

24. Système de toit coulissant (1) selon la revendication 23, **caractérisé en ce que** les moyens de soutien (90) sont pourvus d'au moins un moyen de rappel (120) élastique actif en compression et exerçant son effet entre un premier point d'ancrage (121) relié fixement à un bras de guidage (60) et un deuxième point d'ancrage (122) relié fixement à un levier de jonction (123) monté de façon pivotante autour de l'axe de rotation (C) du bras de guidage (60), le point d'ancrage (122) étant positionné à l'opposée de l'axe (B) par rapport à l'axe (C), le levier de jonction (123) pouvant d'une part rester pour l'essentiel dans la butée dans le prolongement dans la direction longitudinale du bras de guidage (60) lorsque l'axe de rotation arrière (B) de la vitre (10) se trouve entre sa position fermée et la verticale par rapport à l'axe de rotation (C) et interagir d'autre part par contact avec une butée (124) reliée fixement à la partie supérieure de la carrosserie (101) lorsque l'axe de rotation (B) se déplace entre la verticale par rapport à l'axe de rotation (C) et la position ouverte, l'appui du levier de jonction (123) contre la butée (124) entraînant la compression du moyen de rappel (120) élastique.

25. Système de toit coulissant (1) selon l'une quelconque des revendications 1 à 24, **caractérisé en ce qu'**il est conçu pour être encastré au niveau de la partie arrière d'un panneau de toit (105) d'un véhicule automobile (100).

26. Véhicule automobile (100), **caractérisé en ce qu'**il comporte au moins un système de toit coulissant (1) selon l'une quelconque des revendications précédentes.
